# EUROPEAN PATENT SPECIFICATION

(11) **EP 1 154 041 B1**
(45) Date of publication and mention of the grant of the patent: **28.12.2005**
(21) Application number: 01303662.9
(22) Date of filing: 20.04.2001
(51) Int. Cl.: C23C 22/68, B23K 35/36, C23G 1/12

(54) **Conversion coatings on aluminium from sprayed KF solutions**
Konversionsbeschichtung für Aluminium durch aufgespritzte KF-Lösungen
Couche de conversion pour l'aluminium par pulvérisation de solutions de fluoride de potassium

(30) Priority: 08.05.2000 US 565750
(43) Date of publication of application: 14.11.2001
(73) Proprietor: Ford Global Technologies, Inc., Dearborn, Michigan 48126 (US)
(72) Inventor: Lazarz, Kimberley Ann, Ypsilanti, Michigan 48197 (US); Zaluzec, Matthew John, Canton, Michigan 48188 (US); Van Evans, Timothy, Ypsilanti, Michigan 48197 (US)
(74) Representative: Messulam, Alec Moses

(56) References cited:
- EP-A- 1 067 213
- WO-A-98/45082
- GB-A- 2 340 133
- US-A- 5 820 015
- PATENT ABSTRACTS OF JAPAN vol. 005, no. 168 (C-077), 27 October 1981 (1981-10-27) & JP 56 096083 A (NIPPON PARKERIZING CO LTD), 3 August 1981 (1981-08-03)

## Description

This invention relates to forming a conversion coating on an aluminium surface which replaces the native aluminium surface oxides. More particularly, the conversion coating is formed by first treating the aluminium by thermal degreasing or aqueous alkaline degreasing and then exposing the treated aluminium to an aqueous KF solution. This coating has various uses, e.g., as a brazing aid, as a durable abrasion resistant surface with good lubricity, and to modify surfaces subjected to adhesive bonding.

Workers in the field often use brazing to join aluminium alloy components and in particular, brazing is the preferred method for joining aluminium heat exchanger assemblies. Aluminium and aluminium alloys, however, are generally very reactive and rapidly form a surface oxide film (5-100 nanometers thick) when exposed to the atmosphere at ambient temperatures. Such oxide film inhibits forming a strong, high quality, defect-free bond between the articles to be joined. Thus, to effect a metallurgical, chemical or intermetallic bond between the aluminium or aluminium alloys, it is considered necessary to remove, dissolve or disrupt such oxide film. For example, the oxide layer may be removed by chemical etching using a KF etchant as discussed in US patent 5,820,015. It teaches particularly that the fillet-forming capability of brazeable aluminium alloy can be improved by such etching. Another common way to disrupt the oxide layer is with a flux like NOCOLOK™ applied to the joining surface. It is an aqueous suspension of KAlF₄ + K₃AlF₆ solution which can sprayed onto degreased aluminium parts, and after drying, the parts can be brazed in a furnace. The flux melts at 565-575°C and reacts with the surface aluminium oxide. This causes the surface to be both dissolved and simultaneously protected from further oxidation, as it reaches braze temperature between 585-600°C. One disadvantage of this method of using a flux, however; is the inefficiency of applying the flux. That is, the flux powder needs to be suspended in a liquid vehicle, the surface sprayed before and after assembly, and then dried. The powder flux can also cause housekeeping problems at the manufacturing facility. To overcome problems associated with fluxes, fluxless brazing has been developed.

In one type of fluxless brazing, a flux layer is deposited by chemical conversion on the surface of the aluminium to be brazed. On such method is disclosed in EPO 0140 267 B1 where it is taught that the layer formed is composed of potassium pentafluoroaluminate (K₂AlF₅). In the '267 method, the brazing step includes heating the flux layer below the melting point of the aluminium but higher than the melting point of a brazing alloy to join the aluminium to a counterpart material with the brazing alloy. Providing a completely leak free joint as necessary in applications like heat exchangers is difficult with this process.

We have now unexpectedly found that a flux-less brazeable aluminium or aluminium alloy surface can be prepared which overcomes the deficiencies of prior art processes. It particularly involves an aluminium or aluminium alloy surface which has been treated with thermally degreasing or an alkaline aqueous degreasing. This step was unexpectedly found to be critical, in combination with the conversion coating step using a KF aqueous solution, to the invention.

While this invention conversion coating is useful for surfaces which will be subjected to brazing, it has other usefulness. This conversion coating formed on aluminium was unexpectedly found to be useful for aluminium surfaces which during use are exposed to sliding friction, e.g., swashplates of air-conditioning compressors. That is, this conversion coating provides a durable, abrasion resistant surface to aluminium, with good lubricity characteristics. The conversion coating can also be used as a surface preparation prior to adhesive bonding of the surface. These and other aspects of the invention will be discussed in detail below.

The invention is a method for providing a conversion coating on an aluminium (meaning also aluminium alloy) surface. The method requires providing an aluminium surface which has been treated by thermal degreasing or aqueous alkaline degreasing, such that the treated surface is substantially devoid of grease and oils. It is critical to the method that one of these two particular treatments are used. Subsequently to form the conversion coating, the treated surface is sprayed with an aqueous solution of 0.5-15% KF at a temperature of 32.2°C-100°C (90°F-212°F) for at least 5 seconds at a pressure of 3.4-34x10⁴Nm⁻² (5-50_psi) to provide a conversion coating on the aluminium surface consisting essentially of: (a) substantially all K₃AlF₆ or (b) a major proportion of K₃AlF₆ and a minor proportion of KAlF₄. Optimally to form conversion coatings according to the invention on aluminium particularly useful in fluxless brazing, the aqueous KF concentration is 0.9-1.4 wt% KF.

This coating which is useful on brazeable aluminium surfaces, also finds use, for example to provide aluminium with a durable abrasion resistant coating having good lubricity. It also is useful to modify an aluminium surface to improve adhesive bonding. Optimally, for abrasion resistance, the aqueous KF concentration is 1.0 to 5.0 wt. %. The invention coating advantageously has excellent adhesion to the aluminium surface since it is chemically bound into the aluminium surface through the conversion coating deposition process.
FIG. 1 is a 1cm x 1cm 3003/4045 alloy treated at 0.6% KF/140F/35 seconds/15 psi, the KF concentration being outside the optimum range for brazing.
FIG. 2 is a 1cm x 1cm 3003/4045 alloy treated at 1.2% KF/140F/35 seconds/15 psi, according to an embodiment of the present invention.
FIG. 3 is an X-ray diffraction pattern for the Sample 3 coating, as compared to a standard K₃AlF₆ diffraction pattern.
FIG. 4 is a 1cm x 1cm 3003/4045 alloy treated at 1.5% KF/140F/35 seconds by the immersion process, not according to an embodiment of the present invention.

The invention generally involves spraying a treated aluminium (meaning herein also "aluminium alloy") surface with an aqueous solution of 0.5-15.0 wt. % KF to form a conversion coating consisting essentially of at least K₃AlF₆ and optionally KAlF₄ on the aluminium surface. Advantageously, the aluminium is used to grow particular crystals in a surface layer while removing the oxide coating. That is, this process forms an in-situ layer consisting of at least K₃AlF₆ and optionally KAlF₄.

It is believed that the formation of this conversion coating layer dissolves the oxide layer and simultaneously protects the aluminium surface from further oxidation, as would ordinarily take place if it is heated during a brazing process, e.g., during temperatures between 585 and 600°C. In the discussion of the present invention herein, while the invention conversion coating on aluminium may be referred to a "brazeable" conversion coating, it should be apparent from the disclosure herein that the conversion coated surface need not be subjected to brazing as discussed above. It may be provided on aluminium, e.g., as a wear resistant coating. A significant advantageous use is, however, of embodiments as a coating that allows fluxless brazing of the conversion coated aluminium surface.

While the current invention is believed to deposit a coating on the aluminium similar in composition to fluoride fluxes, the invention conversion coating behaves significantly different than conventional flux. That is, while not wishing to be bound to the following theory, it is believed that if, the aluminium carries a clad layer as is often the case in brazing, the brazeable conversion coating, unlike NOCOLOK™ does not melt before the clad layer. The conversion coating serves to replace the aluminium oxide and, since it is not as tenacious, allows the clad layer to flow when it reaches its melting temperature. It is believed that this significant difference provides superior brazed aluminium joints over those made with conventional potassium fluoroaluminate flux between the aluminium surfaces to be joined by brazing.

We have found, however, that merely spraying an aluminium surface with embodiments of the KF solution does not provide a commercially useful brazeable surface. Rather we have found that it is critical to the present invention that the aluminium surface first be treated by thermal degreasing, e.g., with evaporative oils, or by aqueous alkaline degreasing, e.g., with mild alkaline solutions like potassium hydroxide or sodium hydroxide. Such degreasing techniques are well known to those skilled in the art. Still other materials and treatment conditions within those described above would be apparent to those skilled in the art in view of the present disclosure. The particular thermal degreasing or aqueous alkaline surface degreasing treatment step can vary in material, time, and temperature as long the result it that the surface is degreased. The use of an alkaline solution is preferred. One useful example of a mild alkaline solution for degreasing is 2.0% KOH solution (pH 11.0) at a pressure_of 10.2x10⁴Nm⁻² (15 psi), like 1% Betz Kleen 180 solution, which is allowed to clean the aluminium surface for 35 seconds at 62.8°C (145°F) . After exposure to the cleaner, the treated surface is usually rinsed. As discussed above, use of these particular manners of degreasing is critical to the invention. We unexpectedly found that, when this particular treatment step was not used, and other conventional degreasing treatment such as with acetone was used instead, extremely poor fillet formation (not of commercial usefulness) resulted.

In this invention, the aluminium surface, on which is applied the conversion coating of the present invention, may be carried on another metal like steel or constitute an entire aluminium article. And the aluminium may be in the shape of a sheet or be a three-dimensional article. For example, the conversion coating provided by the present invention may be applied on a surface of an aluminium sheet which is later clad to a core material as by cold milling, in such situations either one or both sides of the cladding may be conversion coating treated according to the present invention, as may be particularly done for brazing uses. A method of making a braze sheet by applying a flux to the sheet and then mechanically embedding the flux into a surface of the sheet is disclosed in commonly owned US patent application Serial No. 09/193,364 filed November 17, 1998. The technique of mechanically embedding the flux could be used in the present invention with the modification that a present invention conversion coated aluminium sheet replaces the flux sheet of the noted '364 application. As disclosed above, herein the aluminium material on which is provide the brazeable invention conversion coating means an aluminium or aluminium alloy material. Examples of the aluminium alloy material include alloys containing mostly aluminium and at least one of such metal as silicon, copper, manganese, zinc, titanium, iron, chromium, zirconium, magnesium, etc. Specific examples thereof are aluminium alloy materials such as Aluminium Association 1XXX, 3XXX, 4XXX, 5XXX, and 6XXX series aluminium alloys. Optimally the aluminium for applications of making heat exchangers would be either pure aluminium or an aluminium alloy such as 3003 or 3003 clad with 4045, 4047, or 4343.

The aluminium surface is first treated as described above to be essentially free of oils and grease. As discussed above, this aluminium surface may be a clad layer provided initially on a core. Then it is sprayed with a dilute KF aqueous solution which is required to have a concentration of 0.5-15.0 wt.% KF in water. This solution as optimally intended for this invention consists essentially of KF in water. The KF solution can be made, e.g., by dissolving potassium fluoride (KF) in water or diluting down a commercially available solution, e.g., a 40% solution, to avoid bringing powders into the manufacturing facility. More preferably, when the conversion coating is for providing a brazeable coating, the KF of the conversion coating bath is 0.9% to 1.4%, most preferably being 1.0% to 1.3% by weight. Optimally, in using the preferred lower concentration KF ranges, a high quality braze can be obtained in a low cost and environmentally friendly way. When the coating is to be used for a durable abrasion resistant coating on aluminium, optimally the concentration of the KF is 1.0 to 5.0 wt %.

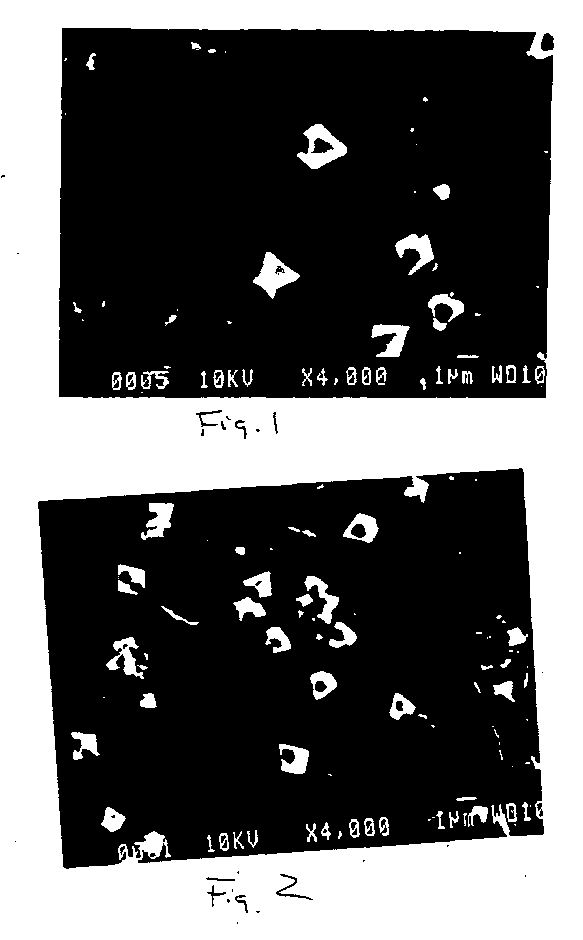

We have surprisingly found that when the KF bath concentration is much less than the 0.5 wt. % KF minimum required in the present invention method, an outstanding conversion coating described herein is not formed. Rather the aluminium is merely etched as disclosed in the '015 patent discussed above. In contrast, Figs. 1 and 2 show conversion coatings formed when higher aqueous KF solutions of 0.6 and 1.2 wt. %, respectively, according to the present invention were used. The crystalline K₃AlF₆ coating is present on both of the surfaces. At the lower KF concentration etching levels, a commercially useful flux-less brazeable coating is not produced.

Due to the mechanical action of the spray itself, as the pressure is increased, the KF concentration of the sprayed aqueous solution may be lowered while achieving a coating. Similarly, the same concentration of KF solution produces different brazeability results if it is applied at different pressures as shown in Example 1. Also, as shown in comparative Example 2, the concentration levels of the spray application must be reduced from the levels required of those prepared by immersion to produce the desired coating coverage.

The degreasing treatment of the aluminium surface was the same for all of the above. We believe the invention embodiments of the aluminium conversion coated surfaces (e.g. 0.9 to 1.4 wt.% KF at 6.8-20.4 x10⁴Nm⁻² (10-30 psi)) allow optimal brazing without flux while the merely etched surfaces where the KF concentration is not sufficient to form a surface conversion coating of K₃AlF₆ (e.g., 0.1 wt. % KF at 13.6x x10⁴Nm⁻² (20 psi)) simply provide an aluminium surface where oxide has been diminished by etching.

The invention conversion coating was found to be firmly adherent to the aluminium and consisted essentially of either all K₃AlF₆ or a mixture thereof with a minor amount of KAlF₄. That is, the invention conversion coating consists essentially of: (a) substantially all K₃AlF₆ or (b) a major proportion of K₃AlF₆ and a minor proportion of KAlF₄. This coating is similar in composition to flux materials but believed to be different in the following way. If, the aluminium carries a clad layer as is often the case in brazing, the conversion coating, unlike NOCOLOK™ does not melt before the clad layer. The conversion coating serves to replace the aluminium oxide and, since it is not as tenacious, allows the clad layer to flow when it reaches its melting temperature. It is believed that this significant difference provides superior brazed articles over that with conventional potassium fluoroaluminate flux.

In the method of providing the conversion coating, the cleaned aluminium is sprayed with the aqueous KF solution to form the conversion coating layer. The KF solution contain potassium and fluorine which when they contact the aluminium chemically react therewith forming the coating described above firmly bond to the aluminium surface. The dilute KF solution is used at a temperature of 32.2-100°C (90°F to 212°F), preferably being 48.8-65.5°C (120° to 150°F), more preferably being 54.4°C to less than 65.5°C (130° to less than 150°F), optimally being 54.4-62.8°C (130°-145°F) . To develop the coating the aluminium is contacted with the aqueous KF spray for at least 5 seconds and optimally up to about 4 minutes, preferably being 15 to 60 seconds, and most preferably being 30 to 60 seconds, and a pressure of 3.4-34 x10⁴Nm⁻² (5-50 psi), with 6.8-20.4 x10⁴Nm⁻² (10-30 psi) being most preferred. Selection of the optimal parameters for providing the conversion coating would be apparent to one skilled in the art in view of the present disclosure. As would be apparent, as the aluminium contact time with the conversion coating solution lengthens, the conversion coating thickness increases. Similarly, as the temperature increases, the time necessary for forming a given thickness conversion coating shortens. At a given concentration the pressure is adjusted to produce the desired coating properties, as would be apparent to one skilled in the art in view of the disclosure herein. For example a KF concentration of 1.2% a pressure of 6.8-20.4x10⁴Nm⁻² (10-30 psi) is preferred over a pressure of 34x10⁴Nm⁻² (50 psi) which yields poorer braze results. While at 1.2% a 34x10⁴Nm⁻² (50 psi) pressure would be desired to produce an abrasion resistant coating. We have also found that this inventive coating is extremely stable and the conversion coated aluminium can be stored for at least several months before brazing without any loss of brazeable properties.

As discussed above, one particular use of the invention process is providing a brazeable aluminium surface. For example, it may be used in the assembling of a heat exchanger assembly like a condenser for an air conditioning system, as used in an automotive vehicle. Such heat exchanger assembly generally includes at least one, preferably a plurality of tubes made of aluminium alloy material like those disclosed above. Preferably, to provide an optimal quality brazeable surface, the aluminium or the aluminium cladding material on which is formed the conversion coating includes magnesium at a level at or below 0.20%. Each tube has an internal surface and an external surface. The internal tube surface and external tube surface each generally have an aluminium alloy cladding. One such cladding for a heat exchanger assembly is disclosed in US patent 5,771,962. As is disclosed therein, the cladding comprises, based on weight percent, 0.01 - 0.3 wt. % lithium; 0.2 to 0.7 wt. % magnesium, 0.01 - 0.1 sodium, 4 - 13 wt. % silicon; 0 - 1 wt. % manganese, 0.01 to 0.1 copper, 0 - 0.3 wt. % zinc; 0.01 - 0.7 wt. % beryllium, and impurities not exceeding a total of 1%, the balance being aluminium. Generally, the aluminium cladding has a melting point of 21.2-212°F (10-100°C) lower than the aluminium on which it is clad, e.g., an Al-Si eutectic alloy containing 7-12% by weight of Si on the surface.

Considering brazing, the conversion coating of the invention can be applied to an aluminium surface at any of a number of stages before brazing. For example, it can be applied to the assembled or unassembled article like a heat exchanger at the manufacturing facility. Alternatively, the coating can be applied to an aluminium braze sheet either before or after a stamping operation. Further, as discussed above, the conversion coating can be applied to a substrate during a cold rolling operation to provide a brazeable layer either before (according to the '364 application mentioned above) or after a final rolling operation using evaporative forming oils and thermal degreasing. All of these aspects and others within the concept of the invention disclosed herein for providing a brazeable conversion coating on aluminium are included within the present invention.

The conversion coating formed by the method disclosed above has also unexpectedly been found to provide a durable, abrasion resistant surface layer on aluminium. This is particularly useful when the aluminium surface is, during use, subjected to sliding friction. For example, aluminium or aluminium alloy swashplates used in air-conditioning compressors have surfaces which during use are exposed to sliding friction. The invention conversion coating has the advantage, over surface coatings which are merely applied onto a surface, that it is specially chemically bound into the aluminium surface as discussed above due to the nature of the conversion coating deposition process. That is, a portion of the aluminium surface dissolves into the KF solution and then re-deposits with the KF to form a K₃AlF₆ surface layer integrally bonded to the aluminium. In addition to this surface layer providing an abrasion resistant surface on the aluminium, it has good lubricity. The invention KF conversion coating was found to be more durable than commonly used tin conversion coatings, as shown in Ex. 4.

Other aluminium surfaces which would benefit from a conversion coating applied according to the method of the present invention, includes, but is not limited to 1xxx, 2xxx, 3xxx, 4xxx, 5xxx, and 6xxx wrought aluminium as well as cast alloys, such as cast A390. Still other surfaces onto which the conversion coating may be applied to provide an abrasion resistant surface will be apparent to those skilled in the art in view of the present disclosure. This may include, but is not limited to, piston rings and other engine components. This conversion coating advantageously forms a chemical barrier that is not only beneficial to brazing, but also as a passivation coating that is resistant to applied friction. That is, this passivating layer improving the wear resistance of the strength of the base aluminium and can last 30% longer in a key life durability test than a typical tin conversion coating.

In another aspect of the invention, the coating has also unexpectedly been found to provide a coating which bonds well to typical adhesives, such as epoxy adhesives. This feature is advantageous in manufacture which involve adhesively bonding aluminium parts together, such as in automobile body construction.

### Example 1

As aluminium sheets, (8) 3003 clad with 4045 sheets of a size 3cm x 3cm were prepared as well as (8) 3003 2.0 cm wide tubes for eight sample runs of tube/sheet braze evaluations. Seven sample pairs of these sheets and tubes were first individually treated by spraying with a dilute solution of Betz Kleen 180, (KOH cleaner) as according to an embodiment of the present invention. All eight pairs were then sprayed with treating solutions containing potassium and fluorine in an attempt to provide a chemical conversion coating step. The KF concentrations and spray conditions are given in Table 1. The samples were rinsed with R.O. water after the cleaner and the KF spraying. The samples were then dried at 120°F and brazing attempted. Sample 8 is the only sample not according to embodiments of the present invention, since it was not alkaline cleaned. Samples 1 & 7 are sprayed at treatment conditions (concentration/pressure) outside the optimum KF range of the present invention for providing an outstanding fluxless brazeable coating. Thus while the conversion coating is present at 0.6% KF spraying, it is not optimally suitable to provide very good fluxless brazing joints. The evaluation of the Tube/Sheet Joints of these eight samples based on a scale of 1-5, with 1 being the highest rating, is listed in Table 1. It can be seen from this table that sample 8 run (non-invention) had the poorest tube/sheet joints.

Further the X-ray diffraction pattern was obtained for the surface of each material to confirm that K₃AlF₆ has been formed. It was found to be formed in all of the samples, including No. 8. However, in spite of K₃AlF₆ being present in run 8 not according to the invention, the conversion coated material did not braze well. This shows the criticality of using one of the two required cleaning procedures according to the present invention.

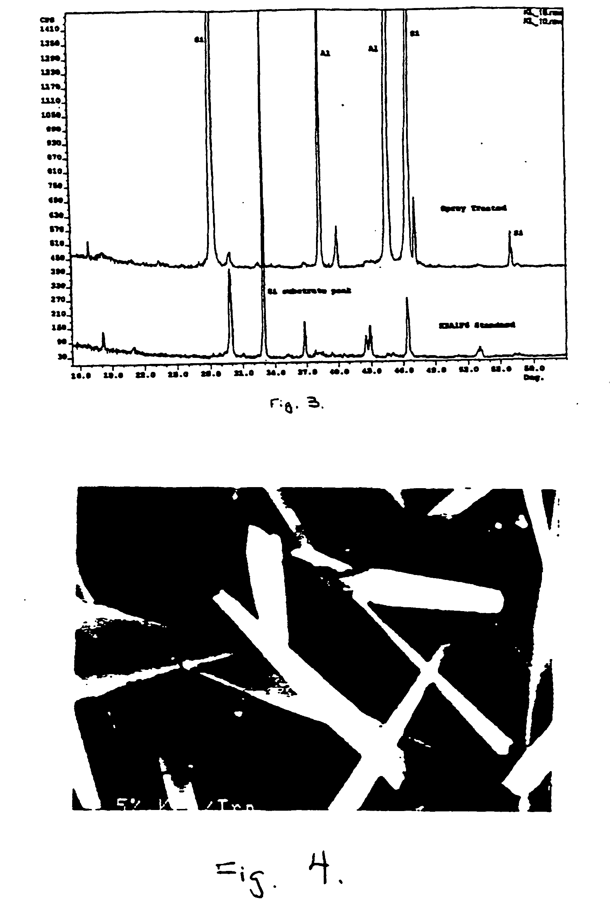

The X-ray diffraction pattern obtained from the aluminium material of sample run No. 3 is shown in Fig. 3 and its surface morphology is shown in Fig. 2. Further the surface morphology of sample run No. 1 is shown in Fig. 1.

**TABLE 1**

| Run No | Al material | Alkaline Cleaning | Wt % KF | Treating Conditions (temp, time, pressure) | Tube/Sheet Joint Evaluation* |
|---|---|---|---|---|---|
| 1 | 3003/4045 | 2%/140F/35 sec/10x10⁴Nm⁻² (15 psi) | 0.6 | 60°C (140F), 35 sec, 10x10⁴Nm⁻² (15 psi) | 4 |
| 2 | 3003/4045 | 2%/140F/35 sec/10x10⁴Nm⁻² (15 psi) | 1.2 | 60°C (140F), 35 sec, 10x10⁴Nm⁻² (8 psi) | 1 |
| 3 | 3003/4045 | 2%/140F/35 sec/10x10⁴Nm⁻² (15 psi) | 1.2 | 60°C (140F), 35 sec, 10x10⁴Nm⁻² (15 psi) | 1 |
| 4 | 3003/4045 | 2%/140F/35 sec/10x10⁴Nm⁻² (15 psi) | 1.2 | 60°C (140F), 35 sec, 10x10⁴Nm⁻² (29 psi) | 2 |
| 5 | 3003/4045 | 2%/140F/35 sec/10x10⁴Nm⁻² (15 psi) | 1.2 | 60°C (140F), 45 sec, 10x10⁴Nm⁻² (15 psi) | 2 |
| 6 | 3003/4045 | 2%/140F/35 sec/10x10⁴Nm⁻² (15 psi) | 1.2 | 60°C (140F), 15 sec, 10x10⁴Nm⁻² (15 psi) | 3 |
| 7 | 3003/4045 | 2%/140F/35 sec/10x10⁴Nm⁻² (15 psi) | 5.0 | 60°C (140F), 35 sec, 10x10⁴Nm⁻² (15 psi) | 4 |
| 8 | 3003/4045 | No | 1.2 | 60°C (140F), 35 sec, 10x10⁴Nm⁻² (15 psi) | 5 |

| | | | | | |
|---|---|---|---|---|---|
| *1-5, 1 being best | | | | | |

### Example 2

This is a comparative example prepared by an immersion process, not according to the present spray method. A tube to sheet assembly was first individually treated by cleaning in a dilute solution of Betz Kleen 180 as according to an embodiment of the present invention. The pair was then immersed in 1.5% KF bath at 60°C (140F) for 45 seconds. The samples were rinsed with R.O water after the cleaner and the KF immersions. The samples were then dried at 48.9°C (120F) and brazing attempted. The 1-5 ranking scale evaluation of the Tube/Sheet Joint of this sample, with 1 being the highest rating received a 5. The surface morphology of this comparative example is shown in Figure 4. This comparative example shows that due to the mechanical action of the spray process, the concentration of the treatment bath can be lowered below the 2.0% threshold for producing the inventive conversion coating by the immersion method.

### Example 3

A full size evaporator was first thermally degreased and treated according to the following spray process: a) Betz Kleen 180 (2%, 62.8°C (145F), 35 seconds, 17x10⁴Nm⁻²(25 psi)) ; b) rinse; c) KF (1.2%, 60°C (140F), 35 seconds, 17x10⁴Nm⁻²(25 psi)); d) rinse. The part was then assembled, externally fluxed, dried, and brazed. The brazed had excellent internal joints which maintained their integrity under high internal pressure testing up to 320 psi. This example demonstrates that the inventive material can be used to provide 'fluxless' internal joints.

### Example 4

An aluminium swashplate was sprayed with a mild alkaline KOH cleaner (1.7% Betz Kleen 180) at 62.8°C (145°F) for 35 seconds at 34x10⁴Nm⁻² (50 psi). After rinsing with tap water, the swashplate was sprayed with a 1.2 wt% KF solution at 60°C (140°F) for 35 seconds at 34x10⁴Nm⁻² (50 psi) . After a final rinse, the coated swashplate component which includes a coating primarily of K₃AlF₆, was assembled in the compressor. The swashplate coating was evaluated for frictional durability on a compressor test stand and was found to be 30% more durable than a conventional tin conversion coating.

## Claims

1. A method for providing conversion coating on an aluminium surface, comprising the steps of:
(a) providing an aluminium surface which has been treated by thermal degreasing or aqueous alkaline degreasing to be substantially devoid of grease and oils;
(b) spraying the treated surface with an aqueous solution of 0.5-15 wt.% KF at a temperature of 32.2-100°C (90°F-212°F) for at least 5 seconds at a pressure of 3.4-34x10⁴Nm⁻² (5-50 psi) to provide a conversion coating on said surface consisting essentially of: (a) substantially all K₃AlF₆ or (b) a mixture comprising a major proportion of K₃AlF₆ and a minor proportion of KAlF₄.

2. The method according to claim 1 wherein said surface aqueous alkaline degreasing comprises exposing said surface to an aqueous solution of sodium hydroxide or potassium hydroxide.

3. The method according to claim 1 wherein said thermal degreasing comprises exposing said surface to a vaporised evaporative oil.

4. The method according to any one of the preceding claims particularly useful for fluxless brazing, wherein said aqueous KF concentration is 0.9-1.4 wt% at 6.8-20.4x10⁴Nm⁻² (10-30 psi).

5. The method according to claim 4 wherein said aqueous KF concentration is 1.0-1.3 wt% at 10.2-17x10⁴Nm⁻² (15-25 psi).

6. The method according to any one of the preceding claims wherein said aqueous KF solution temperature is 48.9-65.6°C (120-150°F).

7. The method according to claim 6 wherein said aqueous KF solution temperature is less than 65.6°C (150°F).

8. The method according to claim 7 wherein said aqueous KF solution temperature is 48.9-62.8°C (120-145°F).

9. The method according to claim 8 wherein said aqueous KF solution temperature is 54.4-62.8°C (130-145°F).

10. The method according to any one of the preceding claims wherein said aluminium surface comprises a surface of an aluminium alloy.

## Patentansprüche

1. Ein Verfahren zur Bereitstellung einer Umwandlungsbeschichtung auf einer Aluminiumoberfläche, das die Schritte umfaßt:
(a) Bereitstellen einer Aluminiumoberfläche, welche durch thermisches Entfetten oder wäßrigalkalisches Entfetten behandelt wurde, um im Wesentlichen frei von Fett und Ölen zu sein;
(b) Besprühen der behandelten Oberfläche mit einer wäßrigen Lösung von 0,5-15 Gewichtsprozent KF bei einer Temperatur von 32,2-100°C (90°F-212°F) für mindestens 5 Sekunden bei einem Druck von 3,4-34x10⁴ Nm⁻² (5-50 psi), um eine Umwandlungsbeschichtung auf dieser Oberfläche bereitzustellen, die im Wesentlichen besteht aus (a) im Wesentlichen vollständig aus K₃AlF₆; oder (b) aus einer einen Hauptanteil K₃AlF₆ und einen untergeordneten Anteil von KAlF₄ umfassenden Mischung.

2. Das Verfahren gemäß Anspruch 1, in dem diese wäßrig-alkalische Oberflächenentfettung es umfaßt diese Oberfläche einer wäßrigen Lösung von Natriumhydroxid oder Kaliumhydroxid auszusetzen.

3. Das Verfahren gemäß Anspruch 1, in dem diese thermische Entfettung es umfaßt diese Oberfläche einem verdunsteten, flüchtigen Öl auszusetzen.

4. Das Verfahren gemäß irgendeinem der vorstehenden Ansprüche, besonders nützlich für flußmittelfreies Hartlöten, in dem diese wäßrige KF-Konzentration 0,9-1,4 Gewichtsprozent bei 6,8-20,4x10⁴ Nm⁻² (10-30 psi) beträgt.

5. Das Verfahren gemäß Anspruch 4, in dem diese wäßrige KF-Konzentration 1,0-1,3 Gewichtsprozent bei 10,2-17,4x10⁴ Nm⁻² (15-25 psi) beträgt.

6. Das Verfahren gemäß irgendeinem der vorstehenden Ansprüche, in dem diese Temperatur der wäßrigen KF-Lösung 48,9-65,6°C (120-150°F) beträgt.

7. Das Verfahren gemäß Anspruch 6, in dem diese Temperatur der wäßrigen KF-Lösung niedriger ist als 65,6°C (150°F).

8. Das Verfahren gemäß Anspruch 7, in dem diese Temperatur der wäßrigen KF-Lösung 48,9-62,8°C (120- 145°F) beträgt.

9. Das Verfahren gemäß Anspruch 8, in dem diese Temperatur der wäßrigen KF-Lösung 54,4-62,8°C (130-145°F) beträgt.

10. Das Verfahren gemäß irgendeinem der vorstehenden Ansprüche, in dem diese Aluminiumoberfläche eine Oberfläche einer Aluminiumlegierung umfaßt.

## Revendications

1. Un procédé pour fournir un revêtement de conversion sur une surface en aluminium, comprenant les étapes de :
(a) fournir une surface en aluminium sans graisse ni huiles, qui a été traitée par dégraissage thermique ou dégraissage alcalin aqueux ;
(b) pulvériser la surface traitée avec une solution aqueuse comprenant entre 0,5 et 15 pourcents molaires de Carobbiite (KF) à une température comprise entre 32,2 et 100 degrés Centigrades (90 à 212 degrés Fahrenheit) pendant au moins 5 secondes sous une pression comprise entre 3,4 et 34 x 10⁴ Pascals (5 à 50 livres par pouce carré) pour fournir un revêtement de conversion sur ladite surface consistant essentiellement :
(a) substantiellement entièrement du K₃AlF₆ ou
(b) un mélange comprenant une portion majeure de K₃AlF₆ et une portion mineure de KAlF₄.

2. Un procédé selon la revendication 1, dans lequel ladite étape de dégraissage alcalin aqueux de la surface comprend l'exposition de ladite surface à une solution aqueuse d'hydroxyde de sodium ou d'hydroxyde de potassium.

3. Un procédé selon la revendication 1, dans lequel ladite étape de dégraissage thermique comprend l'exposition de ladite surface à une huile évaporatoire vaporisée.

4. Un procédé selon l'une quelconque des revendications précédentes, particulièrement utile pour le brasage sans flux, dans lequel ladite concentration aqueuse de Carobbiite (KF) est comprise entre 0,9 et 1,4 pourcents molaires sous 6,8 à 20,4 x 10⁴ Pascals (10 à 30 livres par pouce carré).

5. Un procédé selon la revendication 4, dans lequel ladite concentration aqueuse de Carobbiite (KF) est comprise entre 1,0 et 1,4 pourcents molaires sous 10,2 à 17 x 10⁴ Pascals (15 à 2.5 livres par pouce carré).

6. Un procédé selon l'une quelconque des revendications précédentes, dans lequel ladite température de la solution aqueuse de Carobbiite (KF) est comprise entre 48,9 et 65,6 degrés Centigrades (120 à 150 degrés Fahrenheit).

7. Un procédé selon la revendication 6, dans lequel ladite température de la solution aqueuse de Carobbiite (KF) est inférieure à 65,6 degrés Centigrades (150 degrés Fahrenheit).

8. Un procédé selon la revendication 7, dans lequel ladite température de la solution aqueuse de Carobbiite (KF) est comprise entre 48,9 et 62,8 degrés Centigrades (120 à 145 degrés Fahrenheit).

9. Un procédé selon la revendication 8, dans lequel ladite température de la solution aqueuse de Carobbiite (KF) est comprise entre 54,4 et 62,8 degrés Centigrades (130 à 145 degrés Fahrenheit).

10. Un procédé selon l'une quelconque des revendications précédentes, dans lequel ladite surface en aluminium comprend une surface dans un alliage à l'aluminium.
